# FASCICULE DE BREVET EUROPEEN

(11) **EP 0 571 270 B1**
(45) Date de publication et mention de la délivrance du brevet: **11.09.1996**
(21) Numéro de dépôt: 93401272.5
(22) Date de dépôt: 18.05.1993
(51) Int. Cl.: G21C 9/016

(54) **Dispositif de récupération d'un coeur fondu de réacteur nucléaire**
Auffangvorrichtung für geschmolzenes Kernreaktorspaltmaterial
Catching device for molten nuclear reactor care

(30) Priorité: 21.05.1992 FR 9206208
(43) Date de publication de la demande: 24.11.1993
(73) Titulaire: ELECTRICITE DE FRANCE Service National, F-75008 Paris (FR)
(72) Inventeur: Serviere, Georges, F-69280 Lissieu (FR)
(74) Mandataire: Ilgart, Jean-Christophe

(56) Documents cités:
- DE-A- 2 035 089
- DE-A- 4 032 736
- FR-A- 2 193 233
- GB-A- 2 030 347
- US-A- 4 464 333

## Description

L'invention concerne un dispositif de récupération d'un coeur fondu de réacteur nucléaire, appelé également corium.

Certains accidents du passé proche ont montré que le coeur fondu tombant sur le radier était capable de l'attaquer au point de le percer, et que sa matière risquait alors de se répandre dans le sol voisin avec des conséquences difficilement prévisibles et peu de possibilités de réagir; C'est pourquoi on propose ici un dispositif de récupération, situé sous le coeur, et qui est conçu de manière à le refroidir énergiquement quand il a fondu par suite d'un accident et qu'il est tombé, tout en contrariant sa progression vers le radier. Ce dispositif comprend des cloisons verticales délimitant des volumes séparés, certains des volumes étant vides et les autres volumes étant remplis de réfrigérant. Ces derniers volumes sont surmontés par une couche de matériau réfractaire. On retrouve cette disposition dans US-A-4 464 333, où les cloisons sont des tubes en matière réfractaire de protection que l'eau de refroidissement doit parcourir de bas en haut, puis de haut en bas tout en se vaporisant. La forme tubulaire et la matière réfractaire nuisent probablement à l'efficacité du refroidissement.

La masse de matière fondue est donc destinée à s'écouler dans les volumes vides, mais qui sont suffisamment nombreux et étroits afin de freiner cet écoulement, dont la viscosité est d'ailleurs réduite rapidement par le réfrigérant qui environne les volumes vides ; la matière fondue est largement en relation d'échange de chaleur avec le réfrigérant, dont elle n'est séparée que par les cloisons, qui sont conductrices de la chaleur et normalement assez minces. On peut ainsi espérer ralentir fortement la chute du coeur fondu jusqu'à le forcer à se solidifier avant qu'il n'ait atteint le radier lui-même.

Il est conforme à l'invention que les cloisons soient métalliques et parallèles pour que les volumes remplis de réfrigérant forment des canaux dans lesquels le réfrigérant peut circuler efficacement dans une direction sensiblement horizontale. Dans de telles conditions, les canaux peuvent s'étendre entre une source légèrement surélevée de réfrigérant et un exutoire de réfrigérant vaporisé. Le renouvellement du réfrigérant est alors automatique et causé par la pression hydrostatique dès que la vaporisation diminue la hauteur de réfrigérant d'un côté des canaux.

Les canaux peuvent cependant être séparés de la source par une vanne ou tout autre dispositif d'isolement, mais on peut prévoir une vanne ou un dispositif à ouverture automatique quand le réfrigérant est chauffé.

Il est encore avantageux que les volumes vides et remplis de réfrigérant soient surmontés par une couche continue de matériau d'absorption de la chaleur - qui surmonte la couche des matériaux réfractaires - afin d'amortir le choc tant mécanique que thermique si l'accident survient. On évite ainsi de risquer la destruction de la couche de matériau réfractaire et des cloisons par un coeur dont la température serait excessive. Il faut remarquer à ce sujet que seule la destruction de grandes portions des cloisons pourrait modifier le processus, mais que des destructions de petite taille pendant le fonctionnement normal du dispositif ne devraient pas avoir de conséquences dangereuses, car la matière qui pénétrerait dans les canaux remplis de réfrigérant serait soumise à un refroidissement encore plus énergique et se solidifierait rapidement.

L'invention va maintenant être décrite plus en détail à l'aide des figures suivantes annexées à titre illustratif et non limitatif :

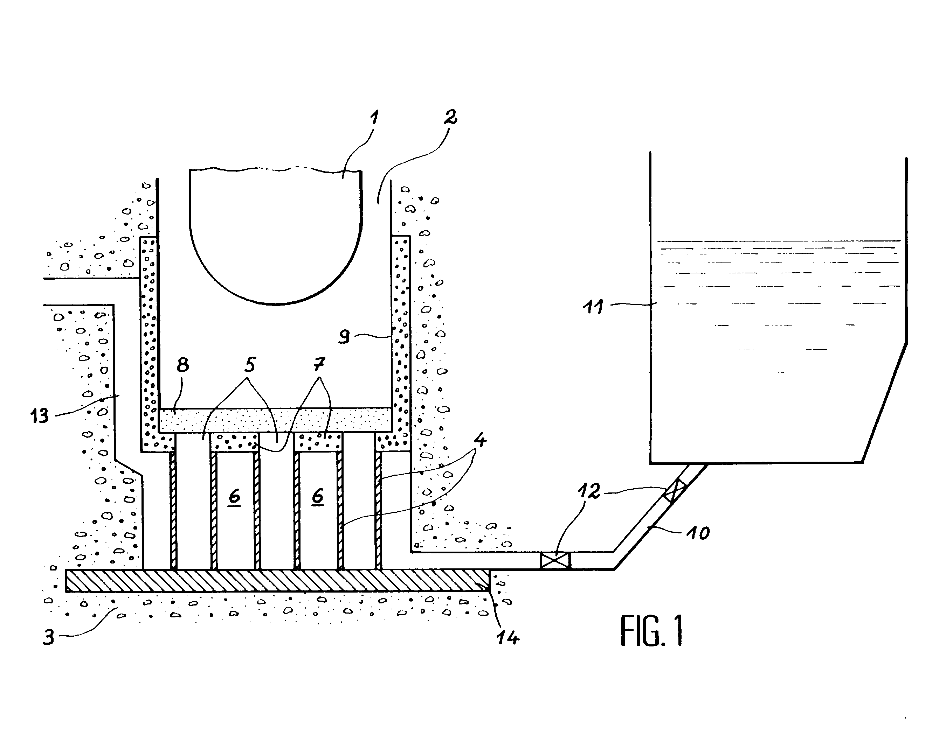

- la figure 1 est une vue générale de l'invention, les canaux étant vus en coupe transversale ;
- la figure 2 est une vue partielle du dispositif en perspective et présentant des coupes ;
- et les figures 3 et 4 représentent une deuxième réalisation de l'invention en coupe verticale, les canaux étant vus longitudinalement, et en vue de dessus.

Le coeur du réacteur nucléaire est situé dans une cuve 1 logée dans un puits 2 à parois de béton. Le radier 3 s'étend sous le puits 2 et sous le reste de la centrale. Le dispositif de récupération est en fait inclus dans le radier 3 et comprend des cloisons 4 constituées normalement de plaques d 'acier parallèles et qui délimitent les volumes vides 5 étroits et allongés qui alternent avec des canaux de réfrigérant 6. Le réfrigérant est normalement de l'eau. Les canaux de réfrigérant 6 sont surmontés chacun d'une couche de béton réfractaire 7 et une couche continue de béton siliceux 8 surmonte les couches de béton réfractaire 7 ainsi que les volumes vides 5 ; un tel matériau est susceptible d'amortir suffisamment le choc de la matière fondue tombant tout en absorbant une partie de sa chaleur afin que le reste du dispositif de récupération ne soit pas soumis à des températures excessives.

Une enceinte de béton réfractaire 9 est disposée au fond du puits 2 et est jointive aux couches de béton réfractaire 7 à leurs extrémités : elle permet de confiner la masse fondue en l'empêchant d'attaquer les parois moins résistantes du puits 2.

Les canaux de réfrigérant 6 sont reliés par au moins une conduite 10 commune à une source de réfrigérant 11 qui peut être de nature quelconque comme un cours d'eau, un lac artificiel ou un puisard de la centrale. Il est concevable dans ce dernier cas que le puisard soit vide pendant le fonctionnement normal et ne soit rempli qu'en cours d'accident, auquel cas la conduite 10 est ouverte. Mais il est plus sûr d'utiliser des puisards en permanence remplis, et si alors le niveau d'eau est trop élevé, des vannes 12 (ou d'autres dispositifs d'obturation) peuvent fermer la conduite 10 en temps normal. Il est alors avantageux que ces vannes 12 ou ces dispositifs soient à ouverture automatique, c'est-à-dire commandés par un dispositif d'asservissement sensible à l'élévation de la température dans la zone des canaux de réfrigérant 6 ou munis de pièces fusibles qui se désagrègent quand la zone proche s'échauffe.

Un exutoire 13, formé par au moins une conduite opposée à la conduite 10 précédente, permet le dégagement libre de la vapeur produite par l'échauffement dans l'atmosphère.

Le fonctionnement du dispositif de récupération tel qu'il est prévu en cas d'accident comporte tout d'abord la destruction de la couche continue de béton siliceux 8, puis la matière fondue s'infiltre dans les volumes vides 5 sans pouvoir attaquer les couches de béton réfractaire 7. Cette matière visqueuse est alors freinée par les cloisons 4 et ne descend que lentement, d'autant plus qu'elle est rapidement soumise à la réfrigération, qui accroît sensiblement sa viscosité. Des perçages locaux des cloisons 4 par de la matière très chaude sont possibles mais ne devraient conduire à aucune perturbation notable car la matière qui viendrait à toucher le réfrigérant serait soumise à un refroidissement encore plus vif qui la solidifierait et la transformerait en bouchon obstruant l'ouverture. Il est donc inutile de songer à protéger les cloisons 4 en les recouvrant de matière réfractaire qui ralentirait sensiblement le refroidissement.

L'évacuation de la vapeur permet un renouvellement permanent et automatique de réfrigérant froid en provenance de la source 11 à travers les canaux de réfrigérant 6, pour compenser le déséquilibre des pressions hydrostatiques. La circulation est purement naturelle et aucune pompe ni dispositif analogue n'est employé. On espère donc figer et solidifier la matière du coeur alors qu'il n'occupe qu'une partie des volumes vides 5. Le refroidissement peut néanmoins se poursuivre si nécessaire jusqu'à un remplissage presque complet des volumes vides 5. On a également prévu une plaque de béton réfractaire 14 située sous les volumes vides 5 et les canaux de réfrigérant 6 comme ultime protection du radier 3 avant qu'il ne soit attaqué.

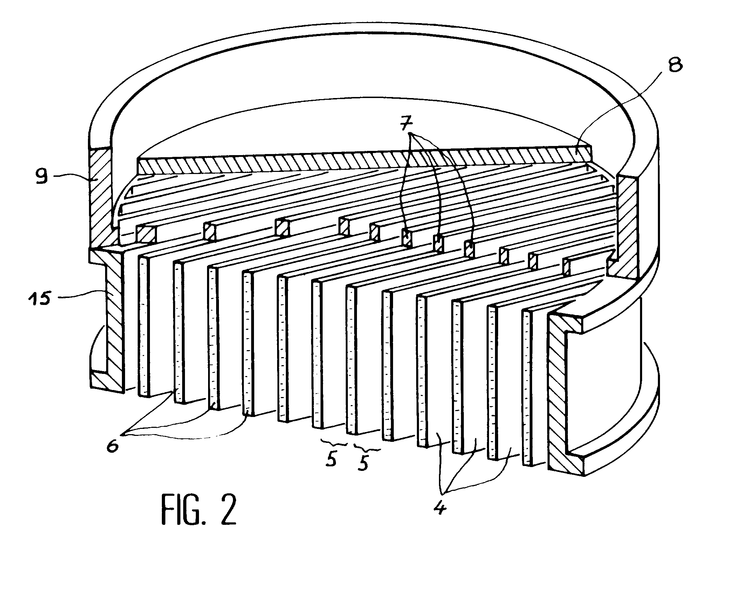

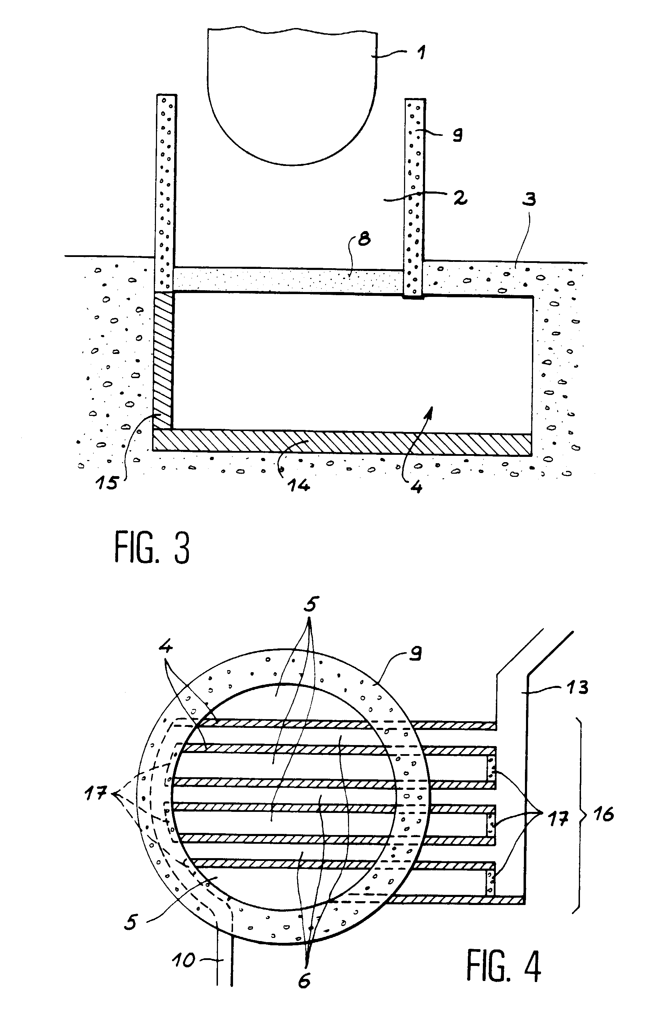

Les cloisons 4 rectilignes qui délimitent des volumes vides 5 en forme de canaux ont l'avantage de permettre un débit de refroidissement important et un gros volume de fluide d'absorption de la chaleur. En outre, le dispositif de récupération peut être allongé d'après la réalisation un peu différente des figures 3 et 4 : l'enceinte de béton réfractaire 9 est soutenue par une fondation 15, représentée également à la figure 2, mais qui ici n'est pas continue mais comporte une interruption 16 dont la largeur correspond sensiblement au diamètre intérieur de l'enceinte de béton réfractaire 9. Les cloisons 4 et les volumes vides 5 et les canaux de réfrigérant 6 qu'elles délimitent, s'étendent sous l'interruption 16 et hors de la fondation 15 et de la verticale du puits 2.

Cette disposition permet au coeur fondu de s'étaler plus et d'être refroidi plus rapidement. L'enceinte de béton réfractaire 9 subit un porte-à-faux suffisamment léger pour être admissible. On voit sur la figure 4 comment la conduite 10 et l'exutoire 13 se raccordent aux extrémités des canaux de réfrigérant 6. Les volumes vides 5 sont isolés de la conduite 10 et de l'exutoire 13 par des parois 17.

## Revendications

1. Dispositif de récupération d'un coeur fondu de réacteur nucléaire, comprenant sous le coeur (1) des cloisons verticales (4) délimitant des volumes séparés (5, 6), certains des volumes (5) étant vides et les autres volumes (6) étant remplis de réfrigérant, les volumes remplis de réfrigérant étant surmontés par une couche de matériau réfractaire (7), caractérisé en ce que les cloisons (4) sont parallèles et métalliques, les volumes (6) remplis de réfrigérant formant des canaux dans lesquels le réfrigérant circule sensiblement horizontalement.

2. Dispositif de récupération d'un coeur fondu suivant la revendication 1, caractérisé en ce que les canaux (6) s'étendent entre une source surélevée (11) de réfrigérant et un exutoire (13) de réfrigérant vaporisé.

3. Dispositif de récupération d'un coeur fondu suivant la revendication 2, caractérisé en ce que la source de réfrigérant (11) est séparée des canaux (6) par une vanne (12) ou un dispositif à ouverture automatique quand le réfrigérant est chauffé.

4. Dispositif de récupération d'un coeur fondu suivant l'une quelconque des revendications 1 à 3, caractérisé en ce que les volumes (5, 6) vides et remplis de réfrigérant sont surmontés par une couche continue (8) de matériau d'absorption de la chaleur, cette couche surmontant la couche de matériau réfractaire.

5. Dispositif de récupération d'un coeur fondu suivant la revendication 4, caractérisé en ce que le matériau d'absorption de la chaleur est du béton siliceux.

6. Dispositif de récupération d'un coeur fondu suivant l'une quelconque des revendications 1 à 5, caractérisé en ce qu'il comprend une enceinte (9) en matériau réfractaire qui entoure une zone située au-dessus des volumes (5, 6) vides et remplis de réfrigérant.

7. Dispositif de récupération d'un coeur fondu suivant l'une quelconque des revendications 1 à 6, caractérisé en ce qu'il comprend une plaque de matériau réfractaire (14) sous les volumes vides et remplis de réfrigérant.

8. Dispositif de récupération d'un coeur fondu suivant l'une quelconque des revendications 1 à 7, caractérisé en ce que le matériau réfractaire est un béton réfractaire.

9. Dispositif de récupération d'un coeur fondu suivant l'une quelconque des revendications 1 à 8, caractérisé en ce que les cloisons (4) s'étendent au-delà de la verticale d'un puits (2) dans lequel le coeur du réacteur est situé.

## Patentansprüche

1. Auffangvorrichtung für einen geschmolzenen Kern eines Kernreaktors, umfassend unter dem Kern (1) vertikale Zwischenwände (4), die getrennte Volumen (5,6) abgrenzen, wobei gewisse der Volumen (5) leer sind und die anderen Volumen (6) kühlmittelgefüllt sind und die kühlmittelgefüllten Volumen von einer hitzebeständigen Materiallage (7) überragt sind, **dadurch gekennzeichnet**, daß die Zwischenwände (4) parallel und aus Metall sind, wobei die kühlmittelgefüllten Volumen (6) Kanäle bilden, in welchen das Kühlmittel merklich horizontal zirkuliert.

2. Auffangvorrichtung für einen geschmolzenen Kern gemäß dem Anspruch 1, **dadurch gekennzeichnet**, daß sich die Kanäle (6) zwischen einer höher gelegenen Kühlmittelquelle (11) und einem Ablaß (13) für verdampftes Kühlmittel ausdehnt.

3. Auffangvorrichtung für einen geschmolzenen Kern gemäß dem Anspruch 2, **dadurch gekennzeichnet**, daß die Kühlmittelquelle (11) von den Kanälen (6) durch ein Ventil (12) oder eine Vorrichtung getrennt ist, mit automatischer Offnung, wenn das Kühlmittel aufgeheizt ist.

4. Auffangvorrichtung für einen geschmolzenen Kern gemäß einem der Ansprüche 1 bis 3, **dadurch gekennzeichnet**, daß die leeren oder kühlmittelgefüllten Volumen (5,6) von einer kontinuierlichen Wärmeabsorbtionsmateriallage (8) überragt sind, wobei diese Lage die hitzebeständige Materiallage überragt.

5. Auffangvorrichtung für einen geschmolzenen Kern gemäß dem Anspruch 4, **dadurch gekennzeichnet**, daß das Wärmeabsorbtions-material aus siliziumhaltigem Beton besteht.

6. Auffangvorrichtung für einen geschmolzenen Kern gemäß einem der Ansprüche 1 bis 5, **dadurch gekennzeichnet**. daß sie eine Einfassung (9) aus hitzebeständigem Material umfaßt, der einen über den leeren und kühlmittelgefüllten Volumen (5,6) gelegenen Bereich umschließt.

7. Auffangvorrichtung für einen geschmolzenen Kern gemäß einem der Ansprüche 1 bis 6, **dadurch gekennzeichnet**, daß sie eine hitzebeständige Materialplatte (14) unter den leeren und kühlmittelgefüllten Volumen umfaßt.

8. Auffangvorrichtung für einen geschmolzenen Kern gemäß einem der Ansprüche 1 bis 7, **dadurch gekennzeichnet**, daß das hitzebeständige Material ein hitzebeständiger Beton ist.

9. Auffangvorrichtung für einen geschmolzenen Kern gemäß einem der Ansprüche 1 bis 8, **dadurch gekennzeichnet**, daß sich die Zwischenwände (4) jenseits der Vertikalen eines Schachts (2) erstrecken, in welchem der Kern des Reaktors angeordnet ist.

## Claims

1. Device for the recovery of a molten nuclear reactor core, characterized in that it comprises beneath the core (1) vertical partitions (4) defining separate volumes (5, 6), certain of the volumes (5) being empty and the other volumes (6) being filled with coolant, the coolant-filled volumes being surmounted by a refractory material layer (7), characterized in that the partitions (4) are parallel and metallic, the coolant-filled volumes (6) forming channels in which the coolant circulates substantially horizontally.

2. Device for the recovery of a molten core according to claim 1, characterized in that the channels (6) extend between a raised coolant source (11) and a vaporized coolant outlet (13).

3. Device for the recovery of a molten core according to claim 2, characterized in that the coolant source (11) is separated from the channels (6) by a valve (12) or an automatic opening device when the coolant is heated.

4. Device for the recovery of a molten core according to any one of the claims 1 to 3, characterized in that the empty and the coolant-filled volumes (5, 6) are surmounted by a continuous heat absorption material layer (8), which surmounts the refractory material layer.

5. Device for the recovery of a molten core according to claim 4, characterized in that the heat absorption material is silica concrete.

6. Device for the recovery of a molten core according to any one of the claims 1 to 5, characterized in that it comprises a refractory material enclosure (9), which surrounds an area located above the empty and coolant-filled volumes (5, 6).

7. Device for the recovery of a molten core according to any one of the claims 1 to 6, characterized in that it comprises a refractory material plate (14) below the empty and coolant-filled volumes.

8. Device for the recovery of a molten core according to any one of the claims 1 to 7, characterized in that the refractory material is a refractory concrete.

9. Device for the recovery of a molten core according to any one of the claims 1 to 8, characterized in that the partitions (4) extend beyond the vertical of a well (2) in which the reactor core is located.
